# EUROPEAN PATENT SPECIFICATION

(11) **EP 2 463 490 B1**
(45) Date of publication and mention of the grant of the patent: **09.09.2015**
(21) Application number: 10194603.6
(22) Date of filing: 10.12.2010
(51) Int. Cl.: F01N 3/04, F28D 7/16, F28F 9/22

(54) **Improvements in or relating to gas coolers for internal combustion engines**
Verbesserungen an oder in Zusammenhang mit Gaskühlern für Verbrennungsmotoren
Améliorations de ou liées à des refroidisseurs de gaz pour moteurs à combustion interne

(43) Date of publication of application: 13.06.2012
(73) Proprietor: Perkins Engines Company Limited, Peterborough PE1 5FQ (GB)
(72) Inventor: Dirker, Martin, Cambridge, Leicestershire PE27 5JZ (GB)
(74) Representative: Boult Wade Tennant

(56) References cited:
- EP-A1- 0 010 499
- EP-A1- 2 194 351
- WO-A1-2008/105576
- WO-A1-2008/117580
- US-A- 2 006 649

## Description

### Field

The present disclosure relates to improvements in or relating to exhaust gas coolers for internal combustion engines.

### Background

Exhaust Gas Recirculation (EGR) is a known technique for use in internal combustion engines (petrol or diesel) wherein a portion of an engine's exhaust gas is recirculated back to the engine cylinders. EGR may be used to reduce emissions of oxides of nitrogen including NO and NO₂. It can be desirable when operating an EGR system to cool the hot exhaust gases before the gases are returned to the engine cylinders. In order to achieve this it is known to use an EGR cooler wherein the exhaust gases are passed through a cooler wherein the gases are transmitted through cooler tubes that are in heat transfer contact with a cooling medium, such as Mater.

It is known to mount cooler tubes vertically within an EGR cooler housing. The cooler tubes within the housing are vertically orientated and arrayed in two rows with an upper row comprising four tubes and a lower row comprising three tubes.

The present applicant has discovered that a high failure rate of known geometry can occur, in particular due to high stresses developed at the junction between the cooler tubes and transverse baffles. In particular, stress concentrations in the baffle at the junctions between the cooler tube mounting points can lead to premature failure.

EP 0010499 or WO2008/105576 both disclose a heat exchanger comprising a housing having a top wall, a bottom wall and first and second side walls which defines a void space in which a plurality of tubular chambers extend longitudinally between end plates in which there are provided orifices of corresponding shape.

### Disclosure

According to the present disclosure there is provided an exhaust gas cooler comprising:
a housing comprising a top wall, a bottom wall and first and second side walls extending longitudinally from a first end to a second end to define a void space;
a plurality of substantially planar cooler tubes extending longitudinally in said housing and arranged in a column from towards the bottom wall to towards the top wall, wherein the plane of each cooler tube is canted relative to the first and second side walls of the housing.

### Brief Description of the Drawings

Figure 1 is a perspective view of an exhaust gas cooler according to the present disclosure with ancillary pipes connected thereto;
Figure 2 is a schematic view of cooler tubes of the exhaust gas cooler of Figure 1 with other components omitted for clarity;
Figure 3 is a perspective view of an exhaust gas cooler according to the present disclosure;
Figure 4 is a perspective view of the exhaust gas cooler of Figure 3 with an end cap removed;
Figure 5 is a schematic view of a baffle of the exhaust gas cooler of Figure 3;
Figure 6 is a schematic view of another baffle according to the present disclosure; and
Figure 7 is a cross-sectional view of a part of the exhaust gas cooler of Figure 3.

### Detailed Description

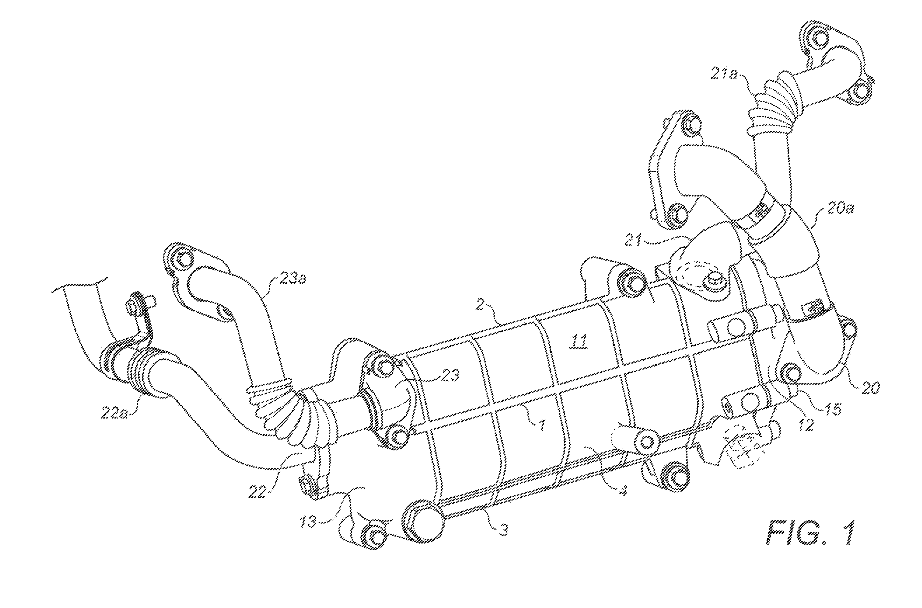

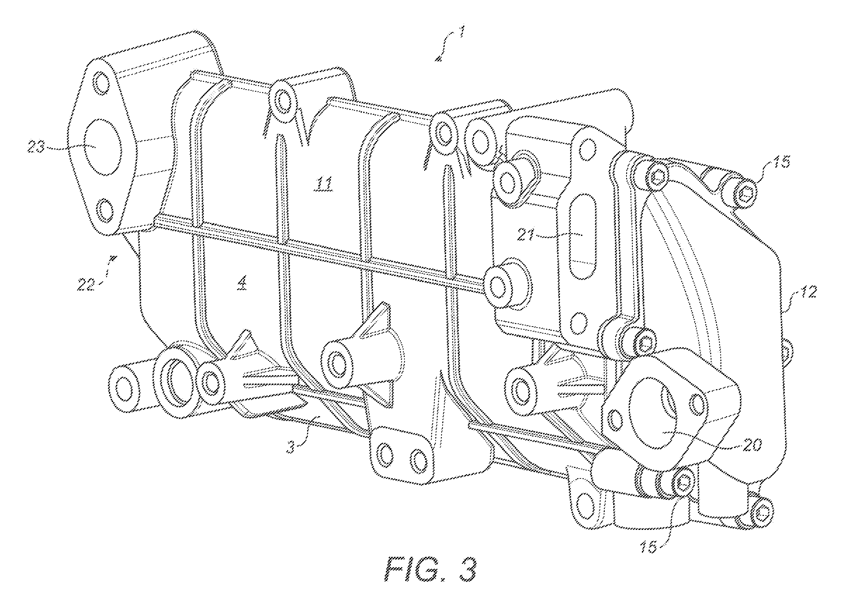

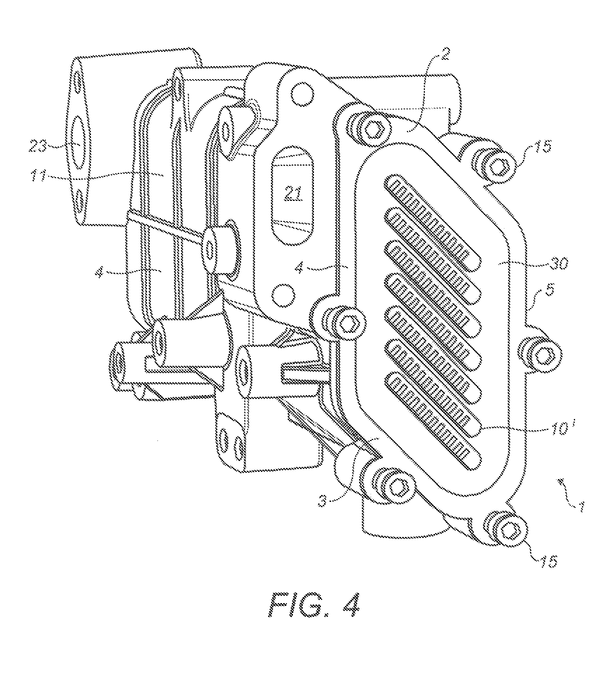

An exhaust gas cooler of the present disclosure is shown in Figures 1 to 4 and may comprise a housing 1 having a top wall 2, bottom wall 3, first side wall 4 and second side wall 5. As best shown in Figure 4, the side walls 4, 5 may be substantially vertical , (in the orientation of the cooler as illustrated - which can of course vary depending on the orientation of the exhaust gas cooler itself) and parallel with one another. The top wall 2 and the bottom wall 3 may be parallel to one another and may be canted at an angle of 45 degrees relative to the side walls 4, 5. As such the cross-section of the housing 1 may adopt a generally rhomboid shape.

The housing 1 may comprise a main casing 11 and an end cap 12 at one end. The end cap 12 is fastened to the end of the main casing possibly using bolts 15.

The housing 1 may be provided with an exhaust gas inlet 20, an exhaust gas outlet 22, a coolant inlet 23 and a coolant outlet 21. In use, ancillary pipes may be used to connect the inlets and outlets to an internal combustion engine. Figure 1 shows an external perspective view of the cooler with the ancillary pipes attached. A gas inlet pipe 20a may be connected to the exhaust gas inlet 20. A gas outlet pipe 22a may be connected to the exhaust gas outlet 22. A coolant inlet pipe 23a may be connected to the coolant inlet 23. A coolant outlet pipe 21a may be connected to the coolant outlet 21.

The coolant inlet 23 and coolant outlet 21 may communicate with a void space within the main casing 11.

In one embodiment seven cooler tubes 10' may be located within the housing 1 as best shown in Figure 4 where the ends of the cooler tubes 10' can be seen protruding through apertures 10 in a first baffle 30. The cooler tubes 10' may be counted, by welding, to the first baffle 30. The cooler tubes 10' may extend along the longitudinal axis of the housing 1 to the second end, One or more intermediate baffles may be provided along the longitudinal length of the cooler tubes to provide structural support. A further baffle may be provided art the second end.

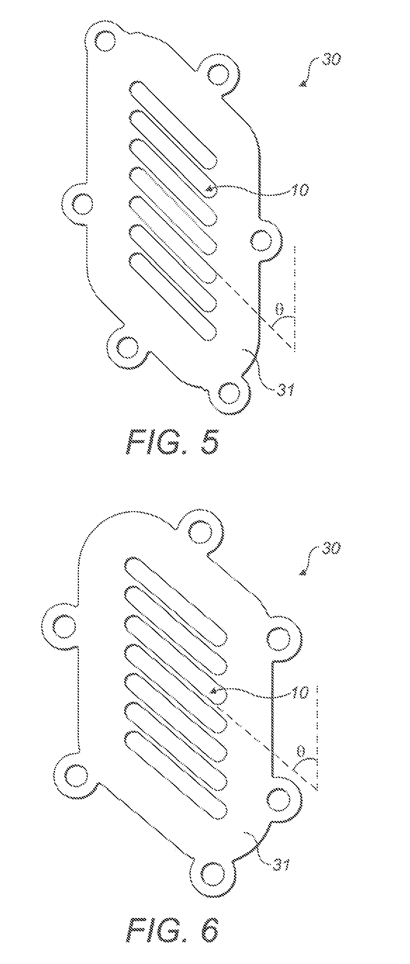

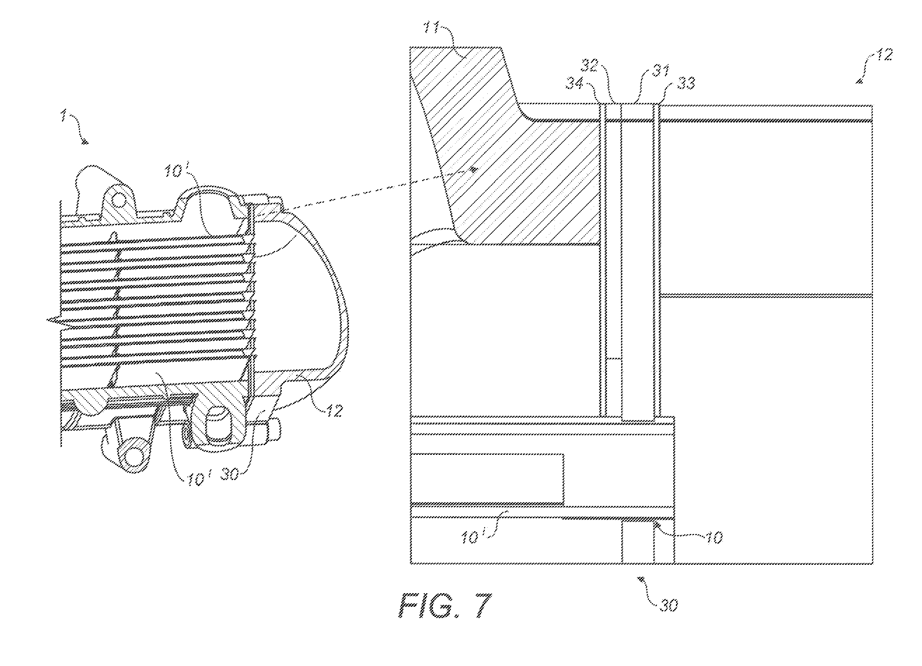

The first baffle 30 is shown in Figure 5 and a portion of the first baffle 30 is illustrated in cross-section in Figure 7. The baffle 30 may comprise a baffle plate 31 having a plurality of apertures 10 therein, a reinforcement piece 32, an outer gasket 33 and an inner gasket 34. On assembly, the first baffle 30 may be mounted between the first end of the main casing 11 and the end cap 12 so as to sandwich the baffle plate 31 and reinforcing piece 32 between the gaskets 33, 34.

The cooler tubes 10' may be welded to the baffle 30 so as to pass through the apertures 10 as shown in Figure 7. Thus, when assembled an interior of the cooler tubes 10' is in fluid communication with the interior of end cap 12 which is in turn in fluid communication with the exhaust gas inlet 20 since the ends of the cooler tubes 10' are open. Similarly at the second end, the exhaust gas outlet 22 may be in fluid communication with the cooler tubes 10' via an interior of housing end 13.

The coolant inlet 23 and outlet 21 may be connected to the void space within the main casing 11 through which the cooler tubes 10' extend.

Thus, in use, hot exhaust gases can be blown through the cooler from the exhaust gas inlet 20 to the exhaust gas outlet 22 via the cooler tubes 10' and at the same time be cooled by pumping a coolant fluid (typically water) through the cooler from the coolant inlet 23 to the coolant outlet 21.

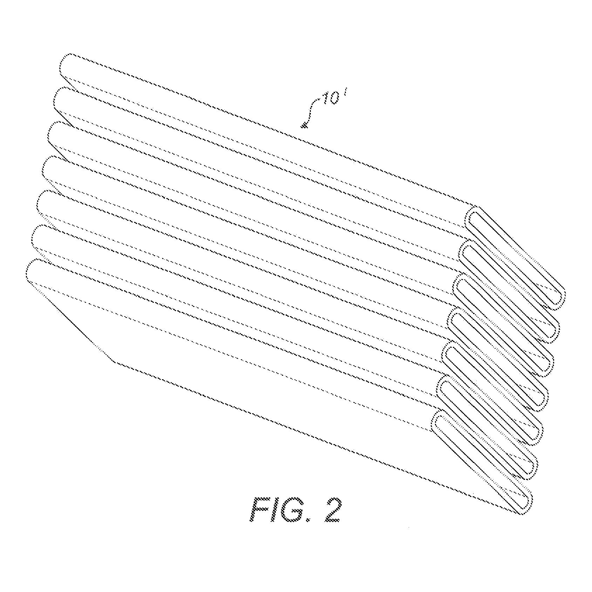

According to the present disclosure, and as shown in Figure 2, each cooler tube 10' may have a planar or plank-like shape being generally flat and elongate in a longitudinal direction and having a cross section that is relatively thin compared to the width of the cooler tube 10'. The longitudinal edges of the tubes 10' may be rounded. The tubes 10' may be hollow or may contain an arrangement of webs, fins or similar to form a tortuous fluid path through the tube 10' which serves to increase the effective surface area of the tube to improve heat transfer between the exhaust gas and the coolant fluid.

The plane of each of the cooler tubes 10' may be canted relative to the side walls 4, 5 at an angle θ of 30 to 80 degrees. In the example of Figure 5 the canting angle θ is 45 degrees. Thus, the longitudinal edges of each tube 10' are not level with one another. In addition, as noted previously, the Lop wall 2 and bottom wall 3 may be canted or angled relative to the side walls 4, 5 such that the cross-sectional shape of the main casing 11 is generally rhomboid. Further the angling of the cooler tubes 10' may be such that the tubes 10' run parallel to the top wall 2 and bottom wall 3 along their length. This canting can be seen for example in Figures 2 and 4.

Figure 6 illustrates a baffle 30 of a modified design for use in an exhaust gas cooler according to the present disclosure wherein the angle θ of the apertures 10 which receive the cooler tubes is 50 degrees. (It will be understood that consequently the cooler tubes will also therefore be angled at 50 degrees). Again the top wall 2 and bottom wall 3 are also canted ant 50 degree so that they run parallel to the cooler tubes.

The cooler tubes 10' may be arranged in a single column equispaced within the housing 1.

Arranging the cooler tubes 10' in a manner according to the present disclosure has been found to lead to a significantly reduced stress with lower peak von-Mises stresses

### Insdutrial Applicability

The present disclosure finds application in exhaust gas coolers for internal combustion engines and leads to improvements in the reliability and durability of such exhaust gas coolers.

### Reference Numerals

- 1: Housing
- 2: Top wall
- 3: Bottom wall
- 4: First side wall
- 5: Second side wall
- 10: Apertures
- 10': Cooler tubes
- 11: Main casing
- 12: End cap
- 13: Housing end
- 15: Bolts
- 20: Exhaust gas inlet
- 20a: Gas inlet pipe
- 21: Coolant outlet
- 21a: Coolant pipe
- 22: Exhaust gas outlet
- 22a: Gas outlet pipe
- 23: Coolant inlet
- 23a: Coolant inlet pipe
- 30: First baffle
- 31: Baffle plate
- 32: Reinforcement piece
- 33: Outer gasket
- 34: Inner gasket
- θ: Canting angle of cooler tubes

## Claims

1. An exhaust gas cooler comprising:
a housing (1) comprising a top wall (2), a bottom wall (3) and first and second side walls (4 ,5) extending longitudinally from a first, end to a second end to define a void space;
a plurality of substantially planar cooler tubes (10') extending longitudinally in said housing (1) and arranged in a column from towards the bottom wall (3) to towards the top wall (2) **characterized in that** the plane of each cooler tube (10') is canted relative to the first and second side walls of the housing (1).

2. An exhaust gas cooler as claimed in claim 1 wherein each cooler tube (10') comprises a first longitudinal edge, a second longitudinal edge and an elongate cross-section.

3. An exhaust gas cooler as claimed in any preceding claim wherein the planes of each cooler tube (10') are parallel to each other.

4. An exhaust gas cooler as claimed in any preceding claim wherein the plane of each cooler tube (10') is parallel to a plane of the top wall (2) and/or a plane of the bottom wall (3) .

5. An exhaust gas cooler as claimed in any preceding claim wherein the housing (1) further comprising:
i) an exhaust gas inlet (20) at or near the first end of the housing (1) and an exhaust gas outlet (22) at or near the second end of the housing (1); the exhaust gas inlet (20) and the exhaust gas outlet (22) in fluid communication with the plurality of cooler tubes (10');
ii) a coolant outlet (21) at or near the first end of the housing (1) and a coolant inlet (23) at or near the second end of the housing (1); the cooler outlet (21) and the cooler inlet (23) in fluid communication with the void space.

6. An exhaust gas cooler as claimed in any preceding claim wherein the plurality of cooler tubes (10') extend longitudinally within the void space parallel to a longitudinal axis of the housing (1).

7. An exhaust gas cooler as claimed in any preceding claim wherein the plurality of cooler tubes (10') are arranged in a single column.

8. An exhaust gas cooler as claimed in any preceding claim wherein the plurality of cooler tubes (10') each extend transversely from at or near the first side wall (4) to at or near the second side wall (5).

9. An exhaust gas cooler as claimed in any preceding claim comprising seven cooler tubes (10').

10. An exhaust gas cooler as claimed in any preceding claim wherein the top wall (2), the bottom wall (3) and the first and second side walls (4, 5) define a rhomboid cross-sectional shape of the housing (1).

11. An exhaust gas cooler as claimed in any preceding claim further comprising one or more baffles (30) arranged transverse to the plurality of cooler tubes (10').

12. An exhaust gas cooler as claimed in claim 11 wherein one or more of said baffles (30) comprise a baffle plate (31), one or more reinforcement pieces (32) and one or more gaskets (33, 34).

## Patentansprüche

1. Abgas-Kühlungsvorrichtung umfassend:
ein Gehäuse (1) umfassend eine obere Wand (2), eine Bodenwand (3) und erste und zweite Seitenwände (4, 5), welche sich von einem ersten Ende zu einem zweiten Ende longitudinal erstrecken, um einen Leerraum zu definieren;
eine Mehrzahl von im Wesentlichen ebenen Kühlungsvorrichtungs-Leitungen (10'), welche sich in dem Gehäuse (1) longitudinal erstrecken und in einer Säule von auf die Bodenwand (3) zu bis auf die obere Wand (2) zu angeordnet sind, **dadurch gekennzeichnet, dass** die Ebene jeder Kühlungsvorrichtung-Leitung (10') relativ zu den ersten und zweiten Seitenwänden des Gehäuses (1) geneigt ist.

2. Abgas-Kühlungsvorrichtung nach Anspruch 1, wobei jede Kühlungsvorrichtungs-Leitung (10') einen ersten longitudinalen Rand, einen zweiten longitudinalen Rand und einen länglichen Querschnitt umfasst.

3. Abgas-Kühlungsvorrichtung nach einem der vorhergehenden Ansprüche, wobei die Ebenen jeder Kühlungsvorrichtungs-Leitung (10') zueinander parallel sind.

4. Abgas-Kühlungsvorrichtung nach einem der vorhergehenden Ansprüche, wobei die Ebene jeder Kühlungsvorrichtungs-Leitung (10') zu einer Ebene der oberen Wand (2) und/oder einer Ebene der Bodenwand (3) parallel ist.

5. Abgas-Kühlungsvorrichtung nach einem der vorhergehenden Ansprüche, wobei das Gehäuse (1) ferner umfasst:
i) einen Abgas-Einlass (20) an oder nahe dem ersten Ende des Gehäuses (1) und einen Abgas-Auslass (22) an oder nahe dem zweiten Ende des Gehäuses (1); wobei der Abgas-Einlass (20) und der Abgas-Auslass (22) mit der Mehrzahl von Kühlungsvorrichtungs-Leitungen (10') in Fluidverbindung stehen;
ii) einen Kühlmittel-Auslass (21) an oder nahe dem ersten Ende des Gehäuses (1) und einen Kühlmittel-Einlass (23) an oder nahe dem zweiten Ende des Gehäuses (1); wobei der Kühlungsvorrichtungs-Auslass (21) und der Kühlungsvorrichtungs-Einlass (23) mit dem leeren Raum in Fluidverbindung stehen.

6. Abgas-Kühlungsvorrichtung nach einem der vorhergehenden Ansprüche, wobei sich die Mehrzahl von Kühlungsvorrichtungs-Leitungen (10') innerhalb des leeren Raums parallel zu einer longitudinalen Achse des Gehäuses (1) longitudinal erstreckt.

7. Abgas-Kühlungsvorrichtung nach einem der vorhergehenden Ansprüche, wobei die Mehrzahl der Kühlungsvorrichtungs-Leitungen (10') in einer einzelnen Säule angeordnet ist.

8. Abgas-Kühlungsvorrichtung nach einem der vorhergehenden Ansprüche, wobei sich jede der Mehrzahl von Kühlungsvorrichtungs-Leitungen (10') von an oder nahe der ersten Seitenwand (4) zu an oder nahe der zweiten Seitenwand (5) transversal erstreckt.

9. Abgas-Kühlungsvorrichtung nach einem der vorhergehenden Ansprüche, umfassend sieben Kühlungsvorrichtungs-Leitungen (10').

10. Abgas-Kühlungsvorrichtung nach einem der vorhergehenden Ansprüche, wobei die obere Wand (2), die Bodenwand (3) und die ersten und zweiten Seitenwände (4, 5) eine Rhomboid-QuerschnittsForm des Gehäuses (1) definieren.

11. Abgas-Kühlungsvorrichtung nach einem der vorhergehenden Ansprüche, ferner umfassend einen oder mehrere Strahlablenker (30), welche transversal zu der Mehrzahl von Kühlungsvorrichtungs-Leitungen (10') angeordnet sind.

12. Abgas-Kühlungsvorrichtung nach Anspruch 11, wobei der eine oder die mehreren Strahlablenker (30) eine Strahlablenker-Platte (31), ein oder mehrere Verstärkungsstücke (32) und eine oder mehrere Dichtungen (33, 34) umfassen.

## Revendications

1. Refroidisseur de gaz d'échappement comprenant :
un boîtier (1) comprenant une paroi supérieure (2), une paroi inférieure (3) et des première et deuxième parois latérales (4, 5) s'étendant longitudinalement depuis une première extrémité vers une deuxième extrémité pour définir un espace vide ;
une pluralité de tubes de refroidisseur sensiblement plats (10') s'étendant longitudinalement dans ledit boîtier (1) et agencés dans une colonne depuis la paroi inférieure (3) vers la paroi supérieure (2), **caractérisé en ce que** le plan de chaque tube de refroidisseur (10') est incliné par rapport aux première et deuxième parois latérales du boîtier (1).

2. Refroidisseur de gaz d'échappement tel que revendiqué dans la revendication 1, dans lequel chaque tube de refroidisseur (10') comprend un premier bord longitudinal, un deuxième bord longitudinal et une section transversale allongée.

3. Refroidisseur de gaz d'échappement tel que revendiqué dans l'une des revendications précédentes, dans lequel les plans de chaque tube de refroidisseur (10') sont parallèles les uns aux autres.

4. Refroidisseur de gaz d'échappement tel que revendiqué dans l'une des revendications précédentes, dans lequel le plan de chaque tube de refroidisseur (10') est parallèle à un plan de la paroi supérieure (2) et/ou à un plan de la paroi inférieure (3).

5. Refroidisseur de gaz d'échappement tel que revendiqué dans l'une des revendications précédentes, dans lequel le boîtier (1) comprenant en outre :
i) une entrée de gaz d'échappement (20) au niveau ou à proximité de la première extrémité du boîtier (1) et une sortie de gaz d'échappement (22) au niveau ou à proximité de la deuxième extrémité du boîtier (1) ; l'entrée de gaz d'échappement (20) et la sortie de gaz d'échappement (22) étant en communication fluidique avec la pluralité de tubes de refroidisseur (10') ;
ii) une sortie de fluide de refroidissement (21) au niveau ou à proximité de la première extrémité du boîtier (1) et une entrée de fluide de refroidissement (23) au niveau ou à proximité de la deuxième extrémité du boîtier (1) ; la sortie de fluide de refroidissement (21) et l'entrée de fluide de refroidissement (23) étant en communication fluidique avec l'espace vide.

6. Refroidisseur de gaz d'échappement tel que revendiqué dans l'une des revendications précédentes, dans lequel la pluralité de tubes de refroidisseur (10') s'étendent longitudinalement dans l'espace vide parallèlement à un axe longitudinal du boîtier (1).

7. Refroidisseur de gaz d'échappement tel que revendiqué dans l'une des revendications précédentes, dans lequel la pluralité de tubes de refroidisseur (10') sont agencés dans une seule colonne.

8. Refroidisseur de gaz d'échappement tel que revendiqué dans l'une des revendications précédentes, dans lequel la pluralité de tubes de refroidisseur (10') s'étendent chacun transversalement depuis la partie au niveau ou à proximité de la première paroi latérale (4) vers la partie au niveau ou à proximité de la deuxième paroi latérale (5).

9. Refroidisseur de gaz d'échappement tel que revendiqué dans l'une des revendications précédentes, comprenant sept tubes de refroidisseur (10').

10. Refroidisseur de gaz d'échappement tel que revendiqué dans l'une des revendications précédentes, dans lequel la paroi supérieure (2), la paroi inférieure (3) et les première et deuxième parois latérales (4, 5) définissent une forme en coupe transversale rhomboïdale du boîtier (1).

11. Refroidisseur de gaz d'échappement tel que revendiqué dans l'une des revendications précédentes, comprenant en outre un ou plusieurs déflecteur(s) (30) agencé(s) de manière transversale par rapport à la pluralité de tubes de refroidisseur (10').

12. Refroidisseur de gaz d'échappement tel que revendiqué dans la revendication 11, dans lequel un ou plusieurs dudit ou desdits déflecteur(s) (30) comprend/comprennent une plaque déflectrice (31), une ou plusieurs pièce(s) de renfort (32) et un ou plusieurs joint (s) d'étanchéité (33, 34).
